(19) Europäisches Patentamt / European Patent Office / Office européen des brevets

(11) **EP 3 270 274 B1**

(12) **FASCICULE DE BREVET EUROPEEN**

(45) Date de publication et mention de la délivrance du brevet:
**06.03.2019 Bulletin 2019/10**

(51) Int Cl.:
***G06F 3/044*** *(2006.01)*    ***G06F 3/041*** *(2006.01)*

(21) Numéro de dépôt: **17180329.9**

(22) Date de dépôt: **07.07.2017**

(54) **SURFACE TACTILE MATRICIELLE DE GRANDES DIMENSIONS COMPORTANT UNE ELECTRONIQUE A DOUBLE INJECTION DES LIGNES OU DES COLONNES**

BERÜHRUNGSEMPFINDLICHE MATRIXOBERFLÄCHE MIT GROSSEN ABMESSUNGEN, DIE EINE ELEKTRONIK MIT DOPPELINJEKTION VON ZEILEN ODER SPALTEN UMFASST

LARGE MATRIX TOUCH SURFACE COMPRISING ELECTRONICS WITH DOUBLE INJECTION OF THE ROWS OR COLUMNS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2016 FR 1601096**

(43) Date de publication de la demande:
**17.01.2018 Bulletin 2018/03**

(73) Titulaire: **Thales**
**92400 Courbevoie (FR)**

(72) Inventeurs:
 • **SONTAG, Yves**
 **33200 Bordeaux (FR)**
 • **CONI, Philippe**
 **33127 Saint Jean D'illac (FR)**
 • **ABADIE, Jean-Christophe**
 **33380 Biganos (FR)**
 • **RENAUD, Frédéric**
 **33380 Mios (FR)**

(74) Mandataire: **Bréda, Jean-Marc et al**
**Marks & Clerk France**
**Conseils en Propriété Industrielle**
**Immeuble " Visium "**
**22 Avenue Aristide Briand**
**94117 Arcueil Cedex (FR)**

(56) Documents cités:
**US-A1- 2009 109 190    US-A1- 2014 362 310**
**US-A1- 2015 185 935    US-A1- 2016 117 023**

# Description

Le domaine de l'invention est celui des surfaces tactiles matricielle de type « capacitif projeté ». Plus particulièrement, le domaine technique est celui des matrices de grande dimension.

Le principe de fonctionnement général d'une surface tactile matricielle de type « capacitif projeté » consiste à mesurer les variations de capacitance causées par les appuis que l'on veut détecter. Deux modes de scrutation sont habituellement utilisés. Dans le mode dit « self capacitance », on teste la capacitance de chaque ligne et de chaque colonne de la matrice. Dans le mode « mutual capacitance », on teste toutes les intersections entre les différentes lignes et colonnes. Lorsque la surface tactile est de grande taille et qu'elle comporte un grand nombre de lignes et de colonnes, le mode « mutual capacitance » ne peut être utilisé seul car le temps de scrutation est trop long. Il est, en général, utilisé en complément à une scrutation du type « self capacitance ».

Dans ce dernier mode, l'injection et la mesure du signal peuvent se faire de différentes façons. Un des modes usuels est d'injecter des signaux sinusoïdaux à des fréquences particulières. Cette méthode présente l'avantage de minimiser les émissions rayonnées et de permettre l'utilisation simultanée de plusieurs fréquences dites « orthogonales ». Pour mémoire, deux fréquences sont dites orthogonales s'il existe deux nombres entiers non multiples l'un de l'autre tel que le produit du premier nombre entier par la première fréquence est égal au produit du second nombre entier par la seconde fréquence.

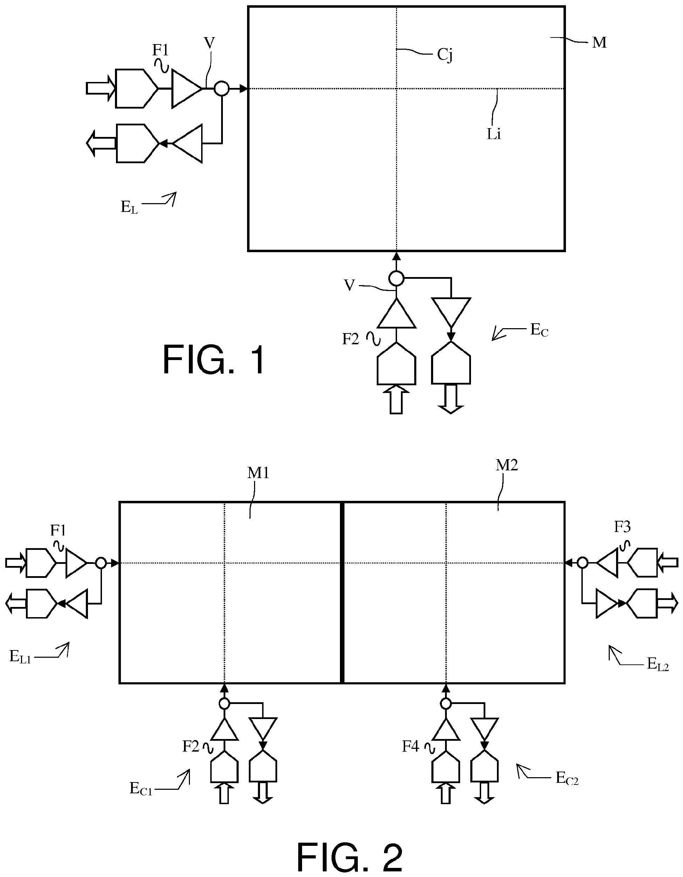

La mesure du signal peut se faire par pont capacitif, en injectant un courant et en mesurant une tension ou inversement en injectant une tension et en mesurant un courant. La figure 1 illustre ce dernier mode de fonctionnement. Cette figure représente schématiquement une matrice tactile M comportant une pluralité de lignes Li et de colonnes Cj. Les électroniques d'adressage EL des lignes et EC des colonnes comportent schématiquement:

- un étage de conversion numérique-analogique « DAC », acronyme signifiant « Digital Analog Converter » qui injecte une tension haute fréquence sinusoïdale notée V sur la ligne ou la colonne de la surface tactile
- un étage de conversion analogique-numérique « ADC », acronyme signifiant « Analog Digital Converter » pour la mesure du courant reçu.

La mesure du courant est assurée par une chaîne de traitement électronique qui détermine la position du ou des appuis sur la dalle tactile et assure la retransmission des signaux traités vers l'extérieur qui est généralement un dispositif de visualisation couplé avec la dalle tactile. En fonction des ressources matérielles disponibles, on peut faire les mesures sur plusieurs lignes simultanément. De la même façon, on peut faire en même temps les mesures sur les colonnes à la condition d'utiliser une seconde fréquence F2 différente de la première fréquence F1 des lignes. Les ressources matérielles nécessaires dépendent du nombre de lignes et de colonnes de la surface tactile et du temps de scrutation souhaité.

Lorsque les tailles de matrice augmentent, cette méthode présente un certain nombre d'inconvénients liés aux paramètres physiques suivants :

- Résistivité des traces d'accès aux lignes et aux colonnes à cause de leur faible largeur et des matériaux utilisés ;
- Capacitance des lignes et des colonnes qui augmente avec leurs dimensions ;
- Résistivité des lignes et des colonnes proprement dites due au matériau transparent utilisé. Dans certaines applications, les exigences de performances optiques interdisent l'utilisation de matériaux moins résistifs mais également moins transparents.

Au final, sur les matrices de grandes dimensions, on constate une perte de sensibilité lorsque l'appui se situe en bout de ligne. Généralement, comme illustré en figure 2, pour résoudre ce problème, on juxtapose deux dalles tactiles matricielles M1 et M2 côte à côte pour former une dalle tactile de dimension double. En utilisant des fréquences différentes F1, F2 et F3, F4 d'une dalle à l'autre, on évite toute interaction incontrôlée. Le principal inconvénient de cette solution est qu'il existe une discontinuité centrale entre les deux dalles tactiles qui est préjudiciable à la bonne perception de l'image globale.

Le document US2015/185935 décrit un dispositif comportant plusieurs dalles juxtaposées où l'excitation des électrodes est réalisée par une liaison à l'extrémité de chaque ligne. Il décrit également un dispositif où chaque ligne est excitée par des signaux identiques appliqués simultanément à ces deux extrémités.

Le document US2014/362310 décrit un dispositif de détection de la position du toucher le long des électrodes comprenant des moyens de transmission et réception de signaux à chaque extrémité dans lequel les signaux d'excitation sont transmis alternativement à chaque extrémité.

Le dispositif selon l'invention ne présente pas les inconvénients précédents. Il permet d'utiliser une dalle tactile de très grandes dimensions sans modifications majeures de celle-ci en injectant et en recevant les signaux de mesure. Plus précisément, l'invention a pour objet un dispositif à surface tactile à détection capacitive projetée comprenant une dalle tactile matricielle comportant une pluralité de lignes conductrices et de colonnes conductrices, ladite dalle étant reliée à des moyens de commande électroniques générant, pour chaque ligne et pour chaque colonne conductrice, des signaux d'émission et des moyens de réception et d'analyse électroniques des signaux de réception issues de chaque ligne et de chaque colonne conductrice,

caractérisé en ce que chaque ligne comporte à une de ses extrémités des premiers moyens de génération d'un premier signal d'émission et des premiers moyens de réception d'un premier signal de réception et à son extrémité opposée des seconds moyens de génération d'un second signal d'émission et des seconds moyens de réception d'un second signal de réception, le premier signal d'émission et le second signal d'émission étant synchrones, ayant la même fréquence, la même amplitude et la même phase.

Avantageusement, les premiers moyens de réception et les seconds moyens de réception comportent des moyens de démodulation synchrone et des moyens de mémorisation :

des signaux de réception démodulés en l'absence d'appuis dits signaux référence, la valeur de chaque signal référence issu de l'extrémité gauche d'une ligne étant notée $M_{REFG}$ et la valeur de chaque signal référence issu de l'extrémité droite de la même ligne étant notée $M_{REFD}$,

des signaux de réception démodulés en présence d'appuis, la valeur de chaque signal issu de l'extrémité gauche d'une ligne étant notée $M_G$ et la valeur de chaque signal issu de l'extrémité droite de la même ligne étant notée $M_D$.

Avantageusement, lorsqu'un appui est détecté, la position dudit appui est calculée à partir du ratio brut $R_B$ de la différence entre les valeurs des signaux $M_D$ et $M_{REFD}$ et de la différence entre les valeurs des signaux $M_G$ et $M_{REFG}$, soit $R_B = (M_D - M_{REFD}) / (M_G - M_{REFG})$.

Avantageusement, lorsqu'un appui est détecté, la position dudit appui est calculée à partir du ratio corrigé $R_C$ multiplié par le rapport des signaux $M_{REFG}$ et $M_{REFD}$, soit $R_C = R_B \cdot (M_{REFG} / M_{REFD})$.

Avantageusement, lorsque la ligne est coupée, selon l'emplacement de la coupure, soit le ratio entre les valeurs des signaux $M_D$ et $M_G$, soit le ratio brut $R_B$, soit le ratio corrigé $R_C$ est altéré, permettant de détecter la coupure et son emplacement.

Avantageusement, en cas d'appuis multiples, les valeurs des signaux de réception démodulés obtenus sur les lignes et les valeurs des signaux de réception démodulés obtenus sur les colonnes permettent de déterminer sans ambiguïté l'emplacement des appuis multiples.

Avantageusement, la fréquence d'émission est située entre 10 kHz et 300 kHz.

L'invention sera mieux comprise et d'autres avantages apparaîtront à la lecture de la description qui va suivre donnée à titre non limitatif et grâce aux figures annexées parmi lesquelles :

La figure 1 représente le principe de fonctionnement d'une surface tactile matricielle de type capacitif projeté selon l'art antérieur ;

La figure 2 représente le fonctionnement d'un système de visualisation de grandes dimensions comportant deux dalles tactiles matricielles selon l'art antérieur ;

La figure 3 représente un dispositif à surface tactile à détection capacitive projetée selon l'invention ;

La figure 4 représente le logarithme du ratio brut de la différence entre les valeurs des signaux reçus à une extrémité d'une ligne et de la différence entre les valeurs des signaux reçus à l'autre extrémité en fonction de la position de l'appui sur la ligne ;

La figure 5 représente le principe de la détection des appuis fantômes.

Le dispositif tactile selon l'invention comporte :

- une dalle tactile matricielle M comportant une pluralité de lignes L conductrices et de colonnes C conductrices ;
- des moyens de commande électroniques générant, pour chaque ligne et pour chaque colonne conductrice, des signaux d'émission et ;
- des moyens de réception et d'analyse électroniques des signaux de réception issus de chaque ligne et de chaque colonne conductrice.

Comme il a été dit, le dispositif selon l'invention s'applique essentiellement aux dalles tactiles dont au moins une des dimensions est importante. On entend par dimension importante une dimension supérieure à 30 centimètres. Il peut, bien entendu, s'appliquer à des dalles tactiles de dimensions inférieures mais son utilité est moindre.

Dans ce qui suit, le dispositif est appliqué aux lignes L de la matrice M. Il peut s'appliquer indifféremment aux colonnes de la matrice ou aux lignes et aux colonnes simultanément.

Dans le dispositif selon l'invention, chaque ligne L comporte à une de ses extrémités des premiers moyens $E_{LG}$ de génération d'un premier signal d'émission et des premiers moyens de réception d'un premier signal de réception et à son extrémité opposée des seconds moyens $E_{LD}$ de génération d'un second signal d'émission et des seconds moyens de réception d'un second signal de réception, le premier signal d'émission et le second signal d'émission étant synchrones, ayant la même fréquence, la même amplitude et la même phase.

La mesure du signal peut se faire par pont capacitif, en injectant un courant et en mesurant une tension ou inversement en injectant une tension et en mesurant un courant.

A titre d'exemple, l'électronique d'adressage de chaque ligne comporte schématiquement:

- un étage de conversion numérique-analogique « DAC », acronyme signifiant « Digital Analog Converter » qui injecte une tension haute fréquence sinusoïdale notée V sur la ligne ou la colonne de la surface tactile
- un étage de conversion analogique-numérique « ADC », acronyme signifiant « Analog Digital Converter » pour la mesure du courant reçu.

La mesure du courant reçu ou de la tension reçue est assurée par une chaîne de traitement électronique, les premiers moyens de réception et les seconds moyens de réception comportant des moyens de démodulation synchrone.

On comprend que, si un appui est effectué sur une ligne, cet appui se trouve nécessairement au plus à mi-distance d'une des extrémités de la ligne L. Par conséquent, au moins un des deux signaux reçus par une des extrémités est faiblement bruité. En tout état de cause, il ne l'est pas plus que sur une matrice dont les lignes ont une longueur deux fois plus faible. Par conséquent, quelque soit la position de l'appui, au moins un des signaux reçus est faiblement bruité.

Il est donc possible de déterminer, connaissant la valeur des signaux reçus aux deux extrémités de chaque ligne L, si une ligne est sollicitée ou non.

Le dispositif selon l'invention permet également de déterminer avec une bonne précision la position de l'appui sur une ligne sollicité en utilisant le ratio des signaux reçus aux deux extrémités de chaque ligne. A cette fin, les moyens de réception comportent des moyens de calibration. En effet, les dissymétries des circuits électroniques utilisés du côté gauche et du côté droit de chaque ligne peuvent rendre imprécise la position de l'appui détecté.

Les moyens de réception comportent des moyens de mémorisation permettant d'assurer cette calibration. Ceux-ci mémorisent :

- les signaux de réception démodulés en l'absence d'appuis dits signaux référence, la valeur de chaque signal référence issu de l'extrémité gauche d'une ligne étant notée $M_{REFG}$ et la valeur de chaque signal référence issu de l'extrémité droite de la même ligne étant notée $M_{REFD}$. Ces signaux permettent la calibration du système ;
- les signaux de réception démodulés en présence d'appuis, la valeur de chaque signal issu de l'extrémité gauche d'une ligne étant notée $M_G$ et la valeur de chaque signal issu de l'extrémité droite de la même ligne étant notée $M_D$.

Le ratio le plus simple dit ratio brut $R_B$ à mettre en oeuvre est le suivant :

$$R_B = (M_D - M_{REFD}) / (M_G - M_{REFG})$$

On peut utiliser un ratio corrigé $R_C$ prenant en compte les variations des signaux de référence. On a alors :

$$R_C = R_B \cdot (M_{REFG} / M_{REFD}).$$

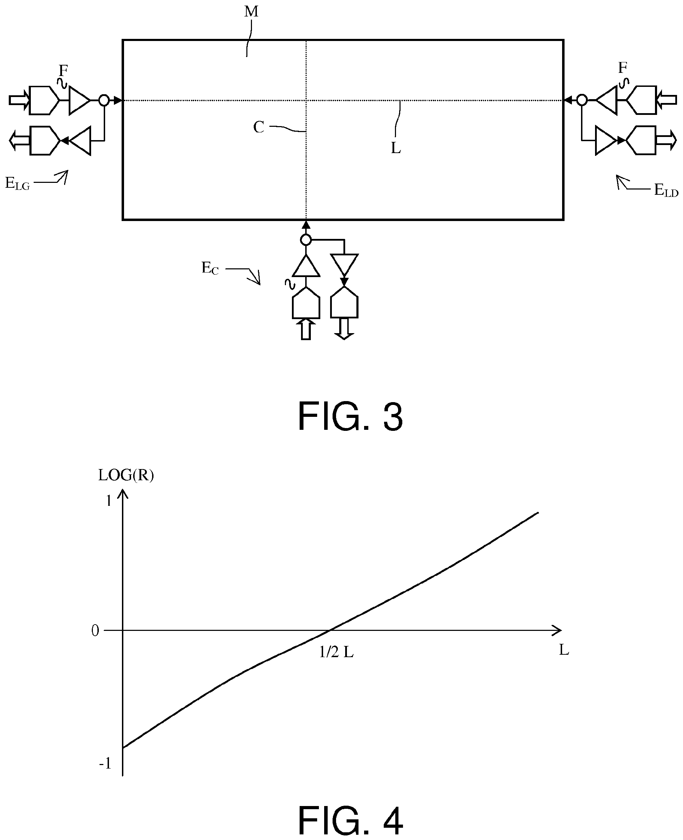

On peut démontrer que le logarithme de ces ratios en fonction de la position de l'appui sur la ligne est quasiment une droite comme on le voit sur la figure 4 qui représente le logarithme $LOG(R)$ du ratio en fonction de la position de l'appui sur une ligne L. Si l'électronique ne présente pas de dissymétries, cette courbe passe par 0 à mi-ligne, R valant sensiblement 1 à mi-ligne.

La possibilité de déterminer simplement la position de l'appui uniquement par des mesures sur les lignes présente de nombreux avantages, les mesures sur les lignes étant complétées par des mesures sur les colonnes C réalisées au moyen de l'électronique $E_C$.

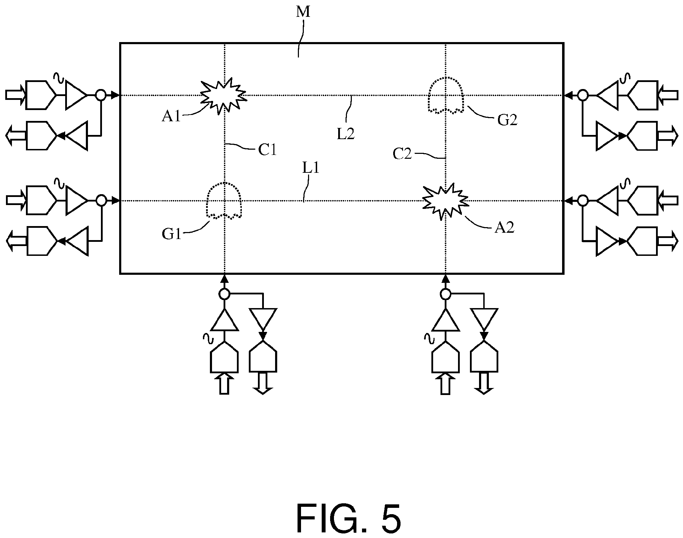

Le premier de ces avantages est la possibilité de détecter les appuis fantômes en cas d'appuis multiples et simultanés. Ce problème est illustré en figure 5. Un utilisateur appuie simultanément en deux points A1 et A2 d'une matrice M. Les coordonnées de ces deux points A1 et A2 sont A1(C1, L2) et A2(C2, L1). Si le dispositif réalise uniquement une mesure permettant de détecter les lignes et les colonnes sollicitées, alors le dispositif détecte que les colonnes C1 et C2 ont été sollicitées et que les lignes L1 et L2 ont été sollicitées, soit quatre appuis possibles. Les deux premiers sont les appuis vrais en A1 et A2 et les deux autres situés en G1(C1, L1) et G2(C2, L2) sont des appuis fantômes sans que l'on puisse discriminer simplement les appuis vrais des appuis fantômes.

Avec le dispositif selon l'invention, ce problème disparaît. En effet, on connaît approximativement les positions des appuis sur les lignes L1 et L2. On peut donc très facilement éliminer les appuis fantômes G1 et G2.

Un autre avantage du dispositif selon l'invention est qu'il facilite la détection des lignes et des colonnes coupées. Dans un certain nombre d'applications, notamment dans le domaine aéronautique, l'intégrité de la matrice tactile est fondamentale pour assurer la sécurité du système. Par conséquent, il est très important de déterminer si la matrice comporte ou non des lignes ou des colonnes coupées. En règle générale, pour traiter ce type de situation, trois actions sont à entreprendre. Il faut détecter la coupure, la localiser et, si possible, la traiter de façon que la matrice reste opérationnelle, même en présence de la coupure.

Il est toujours possible d'effectuer un test soit une fois à la mise sous tension, soit de façon continue, en tache de fond, pendant un temps mort du cycle de scrutation permettant de détecter les éventuelles coupures.

Ce test peut être un test de mesure des couplages électriques lignes-colonnes aux intersections en mode « mutual capacitance » ou un test de mesure de l'impédance ou du courant traversant les différentes lignes et colonnes en mode « self capacitance » ou une combinaison des deux tests précédents de façon à localiser la coupure éventuelle plus rapidement.

Le dispositif selon l'invention facilite le test de dépistage des coupures. Lorsque le dispositif fonctionne en double injection de signaux sur les lignes et en injection simple de signaux sur les colonnes, la détection de la coupure d'une ligne est flagrante en injectant un signal d'un côté de la ligne et en mesurant le signal reçu à l'autre extrémité de la ligne.

Mais l'avantage du dispositif est essentiellement de permettre la détection d'une coupure à tout moment en mode opérationnel. En effet, le temps de détection d'un défaut a une importance capitale dans certains systèmes critiques comme les systèmes avioniques.

Lorsqu'une ligne est coupée, deux cas se présentent. Dans le premier cas, la coupure est située hors de la zone centrale de la ligne. Dans ce cas, le ratio $M_D/M_G$ est anormal, même en prenant en compte les dispersions des composants électroniques. La détection et la localisation approximative de la coupure sont immédiates. La dimension de la surface tactile étant importante, un appui risque de ne pas être détecté s'il a lieu dans la partie longue de la ligne près de la coupure. Il est détecté cependant sur la colonne correspondante et peut être validé au moins dans un mode « monotouche ».

Dans le second cas, la coupure est située dans la zone centrale de la ligne, le ratio $M_D/M_G$ n'est plus anormal sauf si une calibration a été réalisée pour compenser les dispersions des composants électroniques. Cependant, la présence d'un appui sur la ligne permet de détecter immédiatement la coupure de la ligne. En effet, si l'appui se fait à gauche de la coupure, la mesure faite à partir de l'extrémité gauche de la ligne est correcte alors que la mesure faite à partir de l'extrémité droite de la ligne ne donne que du bruit de fond. Le même raisonnement vaut pour un appui à droite de la coupure. Par conséquent, le ratio $M_D/M_G$ est anormal et ne correspond pas aux valeurs attendues en cas d'appui. L'appui est détecté et la coupure également.

Dans le cas d'une colonne coupée fonctionnant en injection simple, si la coupure est proche de l'injection, la variation importante de capacitance mesurée par rapport à la normale permet de détecter la coupure. Ce n'est plus le cas lorsque la coupure est loin de l'injection, sauf à avoir calibré la surface tactile équipée. Dans ce cas, on ne détecte pas d'appui sur la colonne coupée. Cependant, si les lignes sont intactes, l'appui est détecté et localisé sur les lignes fonctionnant en double injection. Ainsi, on détecte à la fois l'appui et la zone de la colonne coupée, voire la colonne coupée si une calibration a été effectuée. Le fait qu'il n'y ait pas d'appui détecté sur cette zone de colonnes permet de détecter la présence d'une colonne défectueuse.

## Revendications

1. Dispositif à surface tactile à détection capacitive projetée comprenant une dalle tactile matricielle (M) comportant une pluralité de lignes (L) conductrices et de colonnes (C) conductrices, ladite dalle étant reliée à des moyens de commande électroniques ($E_{LG}$, $E_{LD}$, $E_C$) générant, pour chaque ligne et pour chaque colonne conductrice, des signaux d'émission et des moyens de réception et d'analyse électroniques des signaux de réception issues de chaque ligne et de chaque colonne conductrice, **caractérisé en ce que** chaque ligne comporte à une de ses extrémités des premiers moyens de génération ($E_{LG}$) d'un premier signal d'émission et des premiers moyens de réception d'un premier signal de réception et à son extrémité opposée des seconds moyens de génération ($E_{LD}$) d'un second signal d'émission et des seconds moyens de réception d'un second signal de réception, le premier signal d'émission et le second signal d'émission étant synchrones, ayant la même fréquence, la même amplitude et la même phase.

2. Dispositif à surface tactile selon la revendication 1, **caractérisé en ce que** les premiers moyens de réception et les seconds moyens de réception comportent des moyens de démodulation synchrone et des moyens de mémorisation :

   des signaux de réception démodulés en l'absence d'appuis dits signaux référence, la valeur de chaque signal référence issu de l'extrémité gauche d'une ligne étant notée $M_{REFG}$ et la valeur de chaque signal référence issu de l'extrémité droite de la même ligne étant notée $M_{REFD}$, des signaux de réception démodulés en présence d'appuis, la valeur de chaque signal issu de l'extrémité gauche d'une ligne étant notée $M_G$ et la valeur de chaque signal issu de l'extrémité droite de la même ligne étant notée $M_D$.

3. Dispositif à surface tactile selon la revendication 2, **caractérisé en ce que**, lorsqu'un appui est détecté, la position dudit appui est calculée à partir du ratio brut $R_B$ de la différence entre les valeurs des signaux $M_D$ et $M_{REFD}$ et de la différence entre les valeurs des signaux $M_G$ et $M_{REFG}$, soit $R_B = (M_D - M_{REFD}) / (M_G - M_{REFG})$.

4. Dispositif à surface tactile selon la revendication 3, **caractérisé en ce que**, lorsqu'un appui est détecté, la position dudit appui est calculée à partir du ratio corrigé $R_C$ multiplié par le rapport des signaux $M_{REFG}$ et $M_{REFD}$, soit $R_C = R_B \cdot (M_{REFG} / M_{REFD})$.

5. Dispositif à surface tactile selon l'une des revendications 2 à 4, **caractérisé en ce que**, lorsque la ligne est coupée, selon l'emplacement de la coupure, soit le ratio entre les valeurs des signaux $M_D$ et $M_G$, soit le ratio brut $R_B$, soit le ratio corrigé $R_C$ est altéré, permettant de détecter la coupure et son emplacement.

6. Dispositif à surface tactile selon l'une des revendications précédentes, **caractérisé en ce qu'**en cas d'appuis multiples, les valeurs des signaux de réception démodulés obtenus sur les lignes et les valeurs des signaux de réception démodulés obtenus sur les colonnes permettent de déterminer sans ambigüité l'emplacement des appuis multiples.

7. Dispositif à surface tactile selon l'une des revendications précédentes, **caractérisé en ce que** la fréquence d'émission est située entre 10 kHz et 300 kHz.

**Patentansprüche**

1. Vorrichtung mit berührungsempfindlicher Oberfläche mit projizierter kapazitiver Erkennung, die einen berührungsempfindlichen Matrix-Touchscreen (M) umfasst, der mehrere leitfähige Reihen (L) und leitfähige Spalten (C) umfasst, wobei der Touchscreen mit elektronischen Steuermitteln ($E_{LG}$, $E_{LD}$, $E_C$) verbunden ist, die für jede leitfähige Reihe und für jede leitfähige Spalte Emissionssignale und elektronische Empfangs- und Analysemittel für Empfangssignale von jeder leitfähigen Reihe und Spalte erzeugt, **dadurch gekennzeichnet, dass** jede Reihe an einem ihrer Enden erste Mittel ($E_{LG}$) zum Erzeugen eines ersten Emissionssignals und erste Mittel zum Empfangen eines ersten Empfangssignals und an ihrem gegenüberliegenden Ende zweite Mittel ($E_{LD}$) zum Erzeugen eines zweiten Emissionssignals und zweite Mittel zum Empfangen eines zweiten Empfangssignals umfasst, wobei das erste Emissionssignal und das zweite Emissionssignal synchron sind und dieselbe Frequenz, dieselbe Amplitude und dieselbe Phase haben.

2. Vorrichtung mit berührungsempfindlicher Oberfläche nach Anspruch 1, **dadurch gekennzeichnet, dass** die ersten Empfangsmittel und die zweiten Empfangsmittel synchrone Demodulationsmittel und Speichermittel umfassen:

   von ohne Aufdruck demodulierten Empfangssignalen, Referenzsignale genannt, wobei der Wert jedes Referenzsignals vom linken Ende eine Reihe mit $M_{REFG}$ bezeichnet ist und der Wert jedes Referenzsignals vom rechten Ende derselben Reihe mit $M_{REFD}$ bezeichnet ist,
   von mit Aufdruck demodulierten Empfangssignalen, wobei der Wert jedes Signals vom linken Ende einer Reihe mit $M_G$ bezeichnet ist und der Wert jedes Signals vom rechten Ende derselben Reihe mit $M_D$ bezeichnet ist.

3. Vorrichtung mit berührungsempfindlicher Oberfläche nach Anspruch 2, **dadurch gekennzeichnet, dass**, wenn ein Aufdruck erkannt wird, die Position des Aufdrucks auf der Basis des Rauschverhältnisses $R_B$ der Differenz zwischen den Werten der Signale $M_D$ und $M_{REFD}$ und der Differenz zwischen den Werten der Signale $M_G$ und $M_{REFG}$ berechnet wird, nämlich $R_B = (M_D - M_{REFD}) / (M_G - M_{REFG})$.

4. Vorrichtung mit berührungsempfindlicher Oberfläche nach Anspruch 3, **dadurch gekennzeichnet, dass**, wenn ein Aufdruck erkannt wird, die Position des Aufdrucks auf der Basis des korrigierten Verhältnisses $R_C$ multipliziert mit dem Verhältnis der Signale $M_{REFG}$ und $M_{REFD}$ berechnet wird, nämlich $R_C = R_B \cdot (M_{REFG} / M_{REFD})$.

5. Vorrichtung mit berührungsempfindlicher Oberfläche nach einem der Ansprüche 2 bis 4, **dadurch gekennzeichnet, dass**, wenn die Reihe unterbrochen wird, je nach einem Ort der Unterbrechung entweder das Verhältnis zwischen den Werten der Signale $M_D$ und $M_G$ oder das Rauschverhältnis $R_B$ oder das korrigierte Verhältnis $R_C$ verändert wird, so dass die Unterbrechung und ihr Ort erkannt werden können.

6. Vorrichtung mit berührungsempfindlicher Oberfläche nach einem der vorherigen Ansprüche, **dadurch gekennzeichnet, dass** im Falle von mehreren Aufdrücken die Werte der auf den Reihen erhaltenen demodulierten Empfangssignale und die Werte der auf den Spalten erhaltenen demodulierten Empfangssignale ein eindeutiges Bestimmen der Orte der mehreren Aufdrücke zulassen.

7. Vorrichtung mit berührungsempfindlicher Oberfläche nach einem der vorherigen Ansprüche, **dadurch gekennzeichnet, dass** die Emissionsfrequenz zwischen 10 kHz und 300 kHz liegt.

**Claims**

1. Device with touch surface with projected capacitive detection comprising a matrix touchscreen (M) comprising a plurality of conductive rows (L) and of conductive columns (C), said screen being linked to electronic control means ($E_{LG}$, $E_{LD}$, $E_C$) generating, for each conductive row and for each conductive column, transmission signals and electronic means for receiving and analysing the reception signals from each conductive row and each conductive column, **characterized in that** each row comprises, at one of its ends, first means for generating ($E_{LG}$) a first transmission signal and first means for receiving a first reception signal and, at its opposite end, second means for generating ($E_{LD}$) a second transmission signal and second means for receiving a second reception signal, the first transmission signal and the second transmission signal being synchronous, having the same frequency, the same amplitude and the same phase.

2. Device with touch surface according to claim 1, **characterized in that** the first reception means and the second reception means comprise synchronous demodulation means and means for storing:

reception signals demodulated in the absence of touches, called reference signals, the value of each reference signal from the left end of a row being denoted $M_{REFG}$ and the value of each reference signal from the right end of the same row being denoted $M_{REFD}$, reception signals demodulated in the presence of touches, the value of each signal from the left end of a row being denoted $M_G$ and the value of each signal from the right end of the same row being denoted $M_D$.

3. Device with touch surface according to claim 2, **characterized in that**, when a touch is detected, the position of said touch is calculated from the raw ratio $R_B$ of the difference between the values of the signals $M_D$ and $M_{REFD}$ and of the difference between the values of the signals $M_G$ and $M_{REFG}$, i.e. $R_B = (M_D - M_{REFD}) / (M_G - M_{REFG})$.

4. Device with touch surface according to claim 3, **characterized in that**, when a touch is detected, the position of said touch is calculated from the corrected ratio $R_C$ multiplied by the ratio of the signals $M_{REFG}$ and $M_{REFD}$, i.e. $R_C = R_B \cdot (M_{REFG} / M_{REFD})$.

5. Device with touch surface according to one of claims 2 to 4, **characterized in that**, when the row is cut, depending on the location of the cut, either the ratio between the values of the signals $M_D$ and $M_G$, or the raw ratio $R_B$, or the corrected ratio $R_C$ is altered, making it possible to detect the cut and its location.

6. Device with touch surface according to one of the preceding claims, **characterized in that**, in case of multiple touches, the values of the demodulated reception signals obtained on the rows and the values of the demodulated reception signals obtained on the columns make it possible to unambiguously determine the location of the multiple touches.

7. Device with touch surface according to one of the preceding claims, **characterized in that** the transmission frequency is situated between 10 kHz and 300 kHz.

FIG. 1

FIG. 2

# FIG. 3

# FIG. 4

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015185935 A

- US 2014362310 A